# DEMANDE DE BREVET EUROPEEN

(11) **EP 2 177 922 A1**
(43) Date de publication de la demande: **21.04.2010**
(21) Numéro de dépôt: 08305685.3
(22) Date de dépôt: 15.10.2008
(51) Int. Cl.: G01R 31/00

(54) **Procédé de test d'un document d'identité électronique et dispositif correspondant.**

(71) Demandeur: Gemalto SA, 92190 Meudon (FR)
(72) Inventeur: Larduinat, Xavier, 92197 Meudon Cedex (FR)
(74) Mandataire: Cassagne, Philippe M.J.

(57) **Abrégé**

L'invention propose un procédé de test d'un document d'identité électronique (2), caractérisé selon l'invention en ce qu'il comprend les étapes de :
- utilisation par l'usager, d'un téléphone mobile NFC en mode lecteur (1, 1'),
- envoi par voie de communication sans fil radioélectrique d'au moins une séquence de données du téléphone mobile NFC en mode lecteur (1, 1') vers le document d'identité électronique (2), ledit téléphone mobile (1, 1') et ledit document d'identité électronique (2) étant rapproché l'un de l'autre, et
- en réponse à la réception par ledit téléphone mobile NFC (1, 1') de données de réponse émises par le document d'identité électronique (2), signalisation par ledit téléphone d'un test réussi à l'attention de l'usager.

## Description

La présente invention concerne un procédé de test d'un document d'identité électronique, et un dispositif correspondant. De plus en plus de documents sécurisés, de type documents d'identité (passeport, carte d'identité, etc.), comportent un circuit électronique avec lecture sans contact. Un tel document d'identité électronique sécurisé est décrit par exemple dans le document FR2824018 ou le document US-A-7040981. Le circuit électronique est formé d'un module électronique, ou puce, connecté à une antenne, inductive ou capacitive. La puce permet par exemple de stocker sous forme numérique des données personnelles d'état civil et biométriques ainsi que des données administratives. Lorsque le document d'identité électronique doit être contrôlé pour en vérifier la validité par exemple, les données stockées sont lues par un appareil récepteur, ou lecteur, au moyen d'un couplage électromagnétique à distance entre le circuit électronique de la carte, autrement appelé transpondeur, et le lecteur. L'utilisation des technologies sans contact apporte des avantages significatifs en terme de sécurité.

Cependant, l'adoption par les gouvernements nationaux de systèmes utilisant de telles solutions électroniques pour les documents d'identité, va conduire au risque pour l'usager de se voir refouler par des agents de la sécurité des frontières, ou équivalents, en cas de défaut de fonctionnement de la puce dans son document d'identité électronique. Ce refoulement étant destiné pour les agents de sécurité à remédier aux risques que la puce dans le document d'identité électronique présenté ait été volontairement rendue inopérante par un fraudeur (par exemple par destruction micro-ondes) pour ainsi éviter un contrôle sécuritaire électronique approfondie (par exemple biométrie électronique).

L'usager non fraudeur pourrait donc ainsi se voir refuser son passage à la frontière, ou son accès à un avion devant décoller pour un problème électronique (puce elle-même, connexion puce/antenne, etc...) dans son document d'identité.

L'invention vise à remédier à cet inconvénient et permettre à l'usager de détecter bien avant son passage de frontière, ou son passage de douanes et/ou sécuritaire à l'aéroport, un problème électronique (puce elle-même, connexion puce/antenne, etc...) dans son document d'identité.

A cette fin, un procédé de test d'un document d'identité électronique, caractérisé selon l'invention en ce qu'il comprend les étapes de :
- utilisation par l'usager, d'un téléphone mobile NFC en mode lecteur,
- envoi par voie de communication sans fil radioélectrique d'au moins une séquence de données du téléphone mobile NFC en mode lecteur vers le document d'identité électronique, ledit téléphone mobile et ledit document d'identité électronique étant rapproché l'un de l'autre, et
- en réponse à la réception par ledit téléphone mobile NFC de données de réponse émises par le document d'identité électronique, signalisation par ledit téléphone d'un test réussi à l'attention de l'usager.

Un dispositif de test d'un document d'identité électronique selon l'invention est caractérisé en ce ledit dispositif est un téléphone mobile NFC opérant en mode lecteur, et en ce qu'il comprend :
- un circuit d'envoi d'au moins une séquence de données vers le document d'identité électronique, sous le contrôle d'un programme de test dans le téléphone, ou une carte qui lui est associée, et
- un circuit de génération par ledit téléphone d'une signalisation d'un test réussi à l'attention de l'usager, en réponse à la réception par le téléphone mobile NFC de données de réponse émises par le document d'identité électronique.

D'autres caractéristiques et avantages de la présente invention apparaîtront plus clairement à la lecture de la description qui suit en relation avec les dessin annexés correspondants dans lesquels :
- La Figure 1 montre une représentation schématique d'un téléphone mobile associée à une carte à puce pour la mise en oeuvre de l'invention selon une réalisation;
- La Figure 2 illustre un diagramme des phases d'initialisation et de mesure d'anticollision selon le protocole ISO14443.

### DESCRIPTION DETAILLEE DE L'INVENTION

La technologie NFC est actuellement développée par un consortium industriel regroupé sous le nom de Forum NFC (http:_//www.nfc-_forum.org). La technologie NFC est dérivée de la technologie RFID (Radio Frequency Identification) et utilise des lecteurs NFC présentant plusieurs modes de fonctionnement, à savoir un mode "lecteur" (Reader Mode), un mode "émulation de carte", et un mode "device " (appelé également mode "device-_to-_device" soit "dispositif à dispositif").

Dans le mode "lecteur", le lecteur NFC fonctionne comme un lecteur RFID conventionnel pour accéder en lecture ou écriture à une puce RFID (carte à puce ou étiquette sans contact). Il émet un champ magnétique, envoie des données par modulation de l'amplitude du champ magnétique et reçoit des données par modulation de charge et couplage inductif. Dans le mode "émulation", décrit par le brevet EP 1 327 222 au nom de la demanderesse, le lecteur NFC fonctionne de façon passive à la manière d'un transpondeur pour dialoguer avec un autre lecteur et être vu par l'autre lecteur comme une puce RFID. Le lecteur n'émet pas de champ magnétique, reçoit des données en démodulant un champ magnétique émis par l'autre lecteur et émet des données par modulation de l'impédance de son circuit d'antenne (modulation de charge). Dans le mode "device", le lecteur doit s'apparier avec un autre lecteur se trouvant
également dans le même mode de fonctionnement, et chaque lecteur se place alternativement dans un état passif (sans émission de champ) pour recevoir des données et dans un état actif (avec émission de champ) pour émettre des données.

En sus de ces trois modes de fonctionnement (d'autres modes de fonctionnement pourraient être imaginés dans le futur), un lecteur NFC peut mettre en oeuvre plusieurs protocoles de communication sans contact et est par exemple capable d'échanger des données suivant le protocole ISO 14443-A, le protocole ISO 14443-B, le protocole ISO 15693, etc.. Chaque protocole définit une fréquence d'émission du champ magnétique, une méthode de modulation de l'amplitude du champ magnétique pour émettre des données en mode actif, et une méthode de modulation de charge par couplage inductif pour émettre des données en mode passif. Un lecteur NFC est donc un dispositif multimode et multiprotocole.

Si le dispositif mobile de communication sans fil est un téléphone mobile, le NFC peut permettre de faire fonctionner un dispositif mobile de communication sans fil en mode émulation de carte, c'est à dire que le dispositif mobile de communication sans fil associé à un élément de sécurité (de type carte à puce) émule le fonctionnement d'une carte à puce sans contact. Dans le cas où le dispositif mobile de communication sans fil est un téléphone mobile (par exemple compatible GSM ou UMTS), la carte SIM est utilisée comme élément de sécurité. Les usages sont multiples et forment un sur-ensemble des usages de type "carte sans-contact": paiement, billettique (ex: navigo), couponing, contrôle d'accès. Le dispositif mobile de communication sans fil, par ses fonctionnalités étendues (IHM, connexion réseau, capacité de traitement), enrichit considérablement les services basées sur des cartes. Par exemple, le mobile permet de payer et de recharger ses titres de transport à tout instant ou de recevoir l'ensemble de ses points de fidélité sur son mobile. Dans un mode alternatif dit « lecteur », le dispositif mobile de communication sans fil devient un lecteur de cartes sans contact ou de "tags" passifs (étiquettes électroniques). Ce mode permet à un usager de lire des informations en approchant son mobile devant des étiquettes électroniques disposées dans la rue, sur des affiches, sur des colis ou dans des abris bus, ou sur sa carte de visite (vCard).

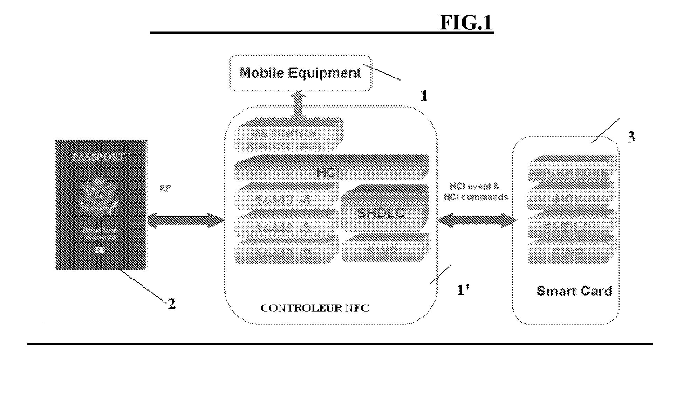

En référence à la Figure 1, un dispositif de test d'un document d'identité électronique selon l'invention est un téléphone mobile NFC 1, 1 opérant en mode lecteur. Il comprend le téléphone mobile lui-même 1 qui incorpore un circuit contrôleur NFC 1', le téléphone recevant par ailleurs une carte SIM 3. Le circuit contrôleur NFC 1' est un composant connu et met notamment en oeuvre un ou plusieurs protocoles de communication sans contact, par exemple le protocole ISO 14443-A, et/ou le protocole ISO 14443-B, et/ou encore le protocole ISO 15693 pour la communication avec le document d'identité électronique 2 distant avec lequel communique le dispositif mobile de communication sans fil sous la forme d'un téléphone mobile. Les Recommandations ISO 14443-A, ISO 14443-B et ISO 15693 sont des Recommandations définies par l'ISO (International Standards Organization), incluses dans la présente demande par cette référence. Le document d'identité électronique 2 est par exemple un passeport ou une carte d'identité. Le circuit contrôleur NFC 1' inclut des couches de communications SWP (Single Wire Protocol), HDLC et HCI (Host Controller Interface) telles que définies par l'ETSI (European Telecommunication Standardization Institute) notamment dans les Recommandations TS 102.613 (SWP) et TS 102.622 (HCI), incluses dans la présente demande par cette référence. Ces couches de communications permettent d'échanger des données avec la carte SIM 3 a travers des couches SWP, HDLC et HCI correspondant mises en oeuvre dans la carte 3.

Dans le mode de réalisation illustrée, la carte SIM 3 inclut également une application de test APPLICATION (logiciel), par exemple sous la forme d'un applet téléchargé dans la carte. Alternativement, cette application de test peut être implémentée dans le circuit contrôleur NFC 1' ou dans un élément sécurisé propre connecté au circuit contrôleur NFC 1'

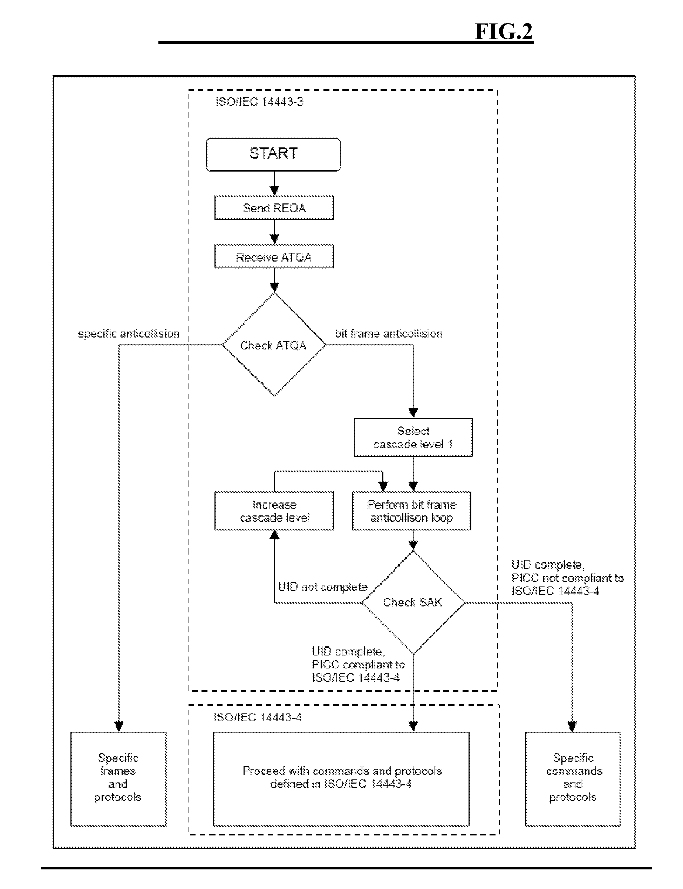

Selon la description faite ici, il est supposé à titre de simple exemple que le passeport met en oeuvre le protocole ISO 14443 . Selon l'invention, lorsque l'usager désire procéder à un test de son passeport, par exemple quelques jours avant de devoir prendre un avion pour l'étranger, il active l'application de test, en utilisant un menu sur son téléphone mobile. Il rapproche également son téléphone mobile 1 de son passeport 2. La sélection 10 par l'usager dans le menu d'un choix de test, déclenche l'activation de l'applet APPLICATION de test dans la carte SIM 3. Cet applet demande l'ouverture d'un canal de communication avec le circuit contrôleur NFC 1', et également décide du choix d'un protocole à utilisé, ici supposé être ici l'ISO 14443. Le circuit contrôleur NFC 1', comme montré dans la figure 2, génère alors une séquence de données REQA, ici d'initialisation. La puce dans le passeport, si celle-ci fonctionne, devra répondre par une séquence de données ATQA (Answer to Request). Laquelle séquence ATQA sera vérifiée par la couche protocolaire 14443-3 dans le circuit contrôleur NFC 1'. Ensuite et selon la Recommandation ISO14443-3, un mesure d'anticollision est effectuée. Une fois ces phases d'initialisation et de mesure d'anticollision effectuées, des données de réponse (issue de la vérification « Check SAK » de la Figure 2) sont remontée à l'application de test APPLICATION dans la carte 3, pour l'inviter à transmettre des commandes éventuelles à l'attention du passeport 2.

Selon l'invention, le test de fonctionnement de la puce dans le passeport 2 peut s'arrêter à ce stade ou à tout autre stade prématuré, puisqu'il ne vise pas à vérifier le fonctionnement complet ou exhaustif des fonctionnalités du passeport 2 (ce qui d'ailleurs n'est pas recommandé pour des raisons de sécurité) mais simplement vérifier que la puce qui y est incluse n'est pas totalement hors service.

A ce stade et une fois reçues les données de réponse, la carte SIM 3 va alors utiliser une commande « DISPLAY TEST » disponible selon la recommandation GSM 11.14 de l'ETSI (dite SIM Toolkit), incluse dans la présente demande par cette référence. En résultat, le téléphone mobile 1 affiche un message de type « TEST PASSEPORT OK ». Bien qu'ici l'on prévoit une signalisation à l'usager par affichage de texte, un mode par sonnerie, vibration du téléphone mobile 1 peut être envisagé.

## Revendications

1. Procédé de test d'un document d'identité électronique (2), **caractérisé** selon l'invention en ce qu'il comprend les étapes de :
- utilisation par l'usager, d'un téléphone mobile NFC en mode lecteur (1, 1'),
- envoi par voie de communication sans fil radioélectrique d'au moins une séquence de données du téléphone mobile NFC en mode lecteur (1, 1') vers le document d'identité électronique (2), ledit téléphone mobile (1, 1') et ledit document d'identité électronique (2) étant rapproché l'un de l'autre, et
- en réponse à la réception par ledit téléphone mobile NFC (1, 1') de données de réponse émises par le document d'identité électronique (2), signalisation par ledit téléphone d'un test réussi à l'attention de l'usager.

2. Dispositif de test d'un document d'identité électronique, **caractérisé en ce** ledit dispositif est un téléphone mobile NFC opérant en mode lecteur (1, 1'), et en ce qu'il comprend :
- un circuit (1') d'envoi d'au moins une séquence de données vers le document d'identité électronique (2), sous le contrôle d'un programme de test (APPLICATION) dans le téléphone, ou une carte (3) qui lui est associée, et
- un circuit de génération par ledit téléphone d'une signalisation d'un test réussi à l'attention de l'usager, en réponse à la réception par le téléphone mobile NFC (1, 1') de données de réponse émises par le document d'identité électronique (2).
